# FASCICULE DE BREVET EUROPEEN

(11) **EP 3 357 113 B1**
(45) Date de publication et mention de la délivrance du brevet: **07.08.2019**
(21) Numéro de dépôt: 16779158.1
(22) Date de dépôt: 16.09.2016
(51) Int. Cl.: H01M 4/133, H01M 4/66, H01M 4/1393, H01M 4/62, H01M 10/0525, H01M 4/587

(54) **PROCEDE DE FIXATION ENTRE UN COLLECTEUR METALLIQUE ET UN FEUTRE DE CARBONE D'UNE BATTERIE ET BATTERIE REALISEE PAR LE PROCEDE**
BEFESTIGUNGSVERFAHREN ZWISCHEN EINEM METALLKOLLEKTOR UND KOHLENSTOFFFILZ EINER BATTERIE UND MIT DIESEM VERFAHREN HERGESTELLTE BATTERIE
METHOD FOR ATTACHMENT BETWEEN A METAL COLLECTOR AND A CARBON FELT OF A BATTERY AND BATTERY PRODUCED BY THE METHOD

(30) Priorité: 28.09.2015 FR 1559097
(43) Date de publication de la demande: 08.08.2018
(73) Titulaire: Commissariat à l'Énergie Atomique et aux Énergies Alternatives, 75015 Paris (FR)
(72) Inventeur: VINCENT, Rémi, 38000 Grenoble (FR); CHAVILLON, Benoît, 38000 Grenoble (FR); MAYOUSSE, Eric, 38000 Grenoble (FR); SCHRODER, Maxime, 02620 Buironfosse (FR)
(74) Mandataire: Cabinet Laurent & Charras
(86) Numéro de dépôt international: PCT/FR2016/052347
(87) Numéro de publication internationale: WO 2017/055705

(56) Documents cités:
- WO-A2-2004/086542
- WO-A2-2007/112075
- US-A1- 2003 010 809

## Description

### DOMAINE DE L'INVENTION

L'invention concerne un procédé de fixation entre un collecteur métallique et un feutre de carbone d'une batterie. L'invention concerne également une batterie obtenue par le procédé de fixation.

L'invention trouve une application particulièrement avantageuse pour les batteries au lithium, lithium-ion, lithium-soufre ainsi que les piles primaires au chlorure de thionyle.

### ETAT ANTERIEUR DE LA TECHNIQUE

Une batterie lithium-ion est un générateur électrochimique qui est capable de transformer de l'énergie chimique emmagasinée en énergie électrique par échange réversible des ions lithium. Une batterie lithium-ion est classiquement constituée de deux électrodes entre lesquelles un électrolyte est disposé formant un coeur électrochimique.

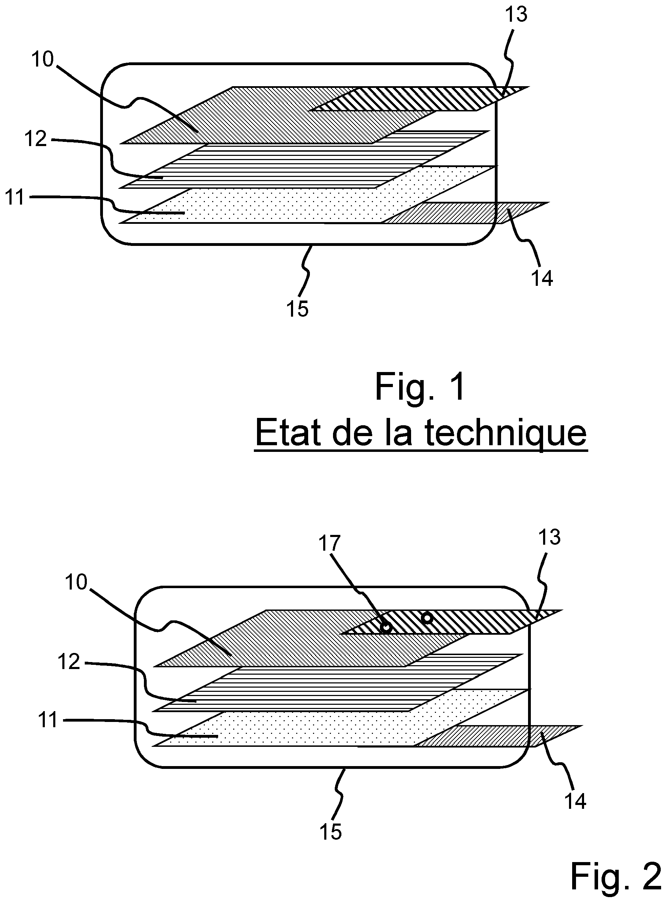

La figure 1 illustre une batterie lithium-ion de l'état de la technique constituée d'un seul coeur électrochimique. Le coeur électrochimique est formé par une électrode positive **10,** une électrode négative **11** et un électrolyte **12** séparant les deux électrodes **10-11.** De préférence, l'électrode positive **10** est constituée de matériaux d'insertion du cation lithium, tels que le dioxyde de cobalt ou le manganèse. L'électrode négative **11** est le plus souvent réalisée en carbone graphite, en titanate, en lithium métal ou en silicium. L'électrolyte **12** est composée d'un séparateur polymère ou composite microporeux imbibé d'électrolyte ou catholyte permettant la migration de l'ion lithium de l'électrode positive **10** à l'électrode négative **11** et inversement, générant ainsi le courant entre les deux électrodes **10, 11**.

L'accès à l'électrode positive **10** est assuré par un premier collecteur de courant **13** réalisé de préférence en aluminium. L'accès à l'électrode négative **11** est assuré par un second collecteur de courant **14.** Le second collecteur de courant **14** est classiquement réalisé en cuivre pour une électrode **11** en carbone graphite, en aluminium pour une électrode **11** en titanate ou en inox ou en nickel selon le type de batterie.

Pour finir, les couches **10-14** sont intégrées dans un boîtier **15** de sorte que seule une partie des collecteurs **13**, **14** est accessible en dehors du boîtier **15.** Le boîtier **15** peut être rigide ou souple et garantit l'étanchéité du coeur électrochimique par rapport aux éléments extérieurs polluants tels que l'eau, l'oxygène et l'azote. Le boîtier **15** peut être réalisé sous la forme d'un sachet thermoformable ou un containeur dur en acier inoxydable ou en aluminium.

La batterie lithium-ion de la figure 1 est réalisée sous forme plane par des couches planaires. En variante, une batterie lithium-ion peut également être réalisée sous forme cylindrique par des couches concentriques. Le coeur électrochimique peut également être réalisé sous forme spiralé ou prismatique. De plus, certaines batteries sont constituées de plusieurs coeurs électrochimiques empilés.

La nouvelle génération des batteries comporte des électrodes positives réalisées par des tissus carbonés ou feutres de carbone. En effet, le feutre de carbone est un matériau permettant d'insérer efficacement les produits de la réaction électrochimique dans les pores du feutre de carbone. Cependant, le feutre de carbone n'étant pas un élément métallique, la liaison du collecteur métallique avec l'électrode positive ne peut pas être réalisée par une soudure classique.

Le document KR 2012 0029289 propose de maintenir le feutre de carbone dans un cadre métallique sur lequel le collecteur est soudé. Cependant, le cadre augmente l'encombrement de la batterie et le procédé de maintien du feutre de carbone sur le cadre est complexe. Un autre procédé de fixation entre un collecteur et un feutre de carbone est décrit dans le document WO2007/112075.

Le but de l'invention est de simplifier l'adhésion et le contact électrique entre un feutre de carbone et un collecteur métallique d'une batterie.

### EXPOSE DE L'INVENTION

L'invention propose d'imprégner le feutre de carbone avec un mélange composé d'une poudre métallique et de réaliser une soudure entre le collecteur métallique et le feutre de carbone imprégné de mélange métallisé.

A cet effet, selon un premier aspect, l'invention concerne un procédé de fixation entre un collecteur métallique et un feutre de carbone d'une batterie, comportant les étapes suivantes :
- imprégnation des pores du feutre de carbone avec un mélange de poudre métallique et de liant,
- soudage par point entre le collecteur métallique et le feutre de carbone imprégné de la poudre métallique.

L'étape d'imprégnation est réalisée de manière localisée dans au moins une zone prédéterminée, et l'étape de soudage par point est réalisée au niveau de l'au moins une zone prédéterminée.

L'invention permet ainsi d'obtenir une liaison mécanique résistante et conductrice entre le collecteur métallique et le feutre de carbone par fusion conjointe du métal du mélange et du collecteur métallique.

Les pores du feutre de carbone sont ainsi d'une part, utilisés pour stocker les constituants de la réaction électrochimique et d'autre part, utilisés pour stocker la poudre métallique pour la soudure. Contre toute attente, l'incorporation d'une poudre métallique localisée dans le feutre de carbone n'altère pas la réaction électrochimique intervenant dans l'électrode.

Selon un mode de réalisation, la poudre métallique est constituée du même matériau que le collecteur métallique. Ce mode de réalisation permet d'améliorer l'adhérence entre le collecteur métallique et le feutre de carbone.

Selon un mode de réalisation, la poudre métallique est constituée en majeur partie d'aluminium, d'acier inoxydable, de nickel ou de cuivre. Ce mode de réalisation permet de définir la poudre métallique en fonction de la chimie de la batterie. En effet, une batterie Lithium-ion utilisera préférentiellement une poudre métallique en aluminium, alors qu'une batterie Lithium-Soufre peut utiliser une poudre métallique en acier inoxydable. De même, d'autres batteries peuvent utiliser des poudres métalliques en nickel ou en cuivre selon les électrolytes mis en oeuvre.

Selon un mode de réalisation, le liant est constitué en majeur partie de colophane. La colophane permet de réduire la tension superficielle des métaux fondus. La colophane permet ainsi aux métaux fondus de couler plus facilement pour recouvrir rapidement et efficacement les surfaces soudées. Des couches d'oxydes pouvant se former en permanence sur les surfaces chauffées lors d'une soudure, la colophane permet de dissoudre ces couches d'oxydes.

Selon un mode de réalisation, le liant est constitué en majeur partie de carboxyméthylcellulose (CMC), de polytétrafluoroéthylène (PTFE) ou de polyfluorure de vinylidène (PVDF).

Selon un mode de réalisation, la taille des particules métalliques de la poudre métallique est inférieure à 1 micromètre, de préférence comprise entre 200 nanomètres et 1000 nanomètres.

Selon un mode de réalisation, la taille des pores du feutre de carbone est comprise entre 10 micromètres et 100 micromètres. Ce mode de réalisation permet d'obtenir un facteur dix entre la taille des pores du feutre de carbone et la taille des particules métalliques, garantissant ainsi une bonne imprégnation du feutre de carbone.

Selon un mode de réalisation, l'au moins une zone prédéterminée constitue un cercle dont le diamètre est compris entre 1 millimètre et 3 millimètres.

Selon un mode de réalisation, le mélange présente entre 20% et 60% en poids de liant, de préférence le mélange présente 40% de liant et 60% de poudre métallique.

Selon un deuxième aspect, l'invention concerne une batterie comportant :
- une électrode positive,
- une électrode négative,
- un électrolyte séparant les deux électrodes,
- un premier collecteur de courant relié électriquement avec l'électrode positive et
- un deuxième collecteur de courant relié électriquement avec l'électrode négative.

L'électrode positive est réalisée par un feutre de carbone, et le premier collecteur de courant est fixé avec l'électrode positive au moyen du procédé de fixation selon le premier aspect de l'invention.

L'invention et les avantages qui en découlent ressortiront mieux des figures et exemples suivants donnés afin d'illustrer l'invention et non de manière limitative.

### DESCRIPTION DES FIGURES

La figure 1 illustre une batterie Lithium-ion de l'état de la technique.
La figure 2 illustre une batterie selon un mode de réalisation de l'invention.

### EXEMPLES DE REALISATION DE L'INVENTION

La figure 2 illustre une batterie constituée d'un seul coeur électrochimique. Le coeur électrochimique est formé par une électrode positive 10, une électrode négative 11 et un électrolyte 12 séparant les deux électrodes **10-11.** De préférence, l'électrode positive 10 est constituée de matériaux tels que le dioxyde de cobalt ou le manganèse. L'électrode négative 11 est le plus souvent réalisée en carbone graphite, en titanate, en lithium métal ou en silicium. L'électrolyte 12 est composée d'un séparateur polymère ou composite microporeux imbibé d'électrolyte ou catholyte permettant la migration d'ions de l'électrode positive 10 à l'électrode négative 11 et inversement générant ainsi le courant entre les deux électrodes 10, 11.

L'accès à l'électrode positive 10 est assuré par un premier collecteur de courant 13 réalisé de préférence en aluminium. L'accès à l'électrode négative 11 est assuré par un second collecteur de courant 14. Le second collecteur de courant 14 est classiquement réalisé en cuivre pour une électrode négative 11 en carbone graphite, en aluminium pour une électrode négative 11 en titanate ou en inox ou en nickel selon le type de batterie.

Pour finir, les couches **10-14** sont intégrées dans un boîtier 15, de sorte que seule une partie des collecteurs 13, 14 est accessible en dehors du boîtier 15. Le boîtier 15 peut être rigide ou souple et garantit l'étanchéité du coeur électrochimique par rapport aux éléments extérieurs polluants tels que l'eau, l'oxygène et l'azote. Le boîtier 15 peut être réalisé sous la forme d'un sachet thermoformable ou un container dur en inox ou en aluminium.

La batterie de la figure 2 est réalisée sous forme plane par des couches planaires. En variante, la batterie peut également être réalisée sous forme cylindrique par des couches concentriques. Le coeur électrochimique peut également être réalisé sous forme spiralé ou prismatique. De plus, la batterie peut être constituée de plusieurs coeurs électrochimiques empilés.

L'invention concerne la fixation entre l'électrode positive 10 et le premier collecteur de courant 13, ladite électrode positive 10 étant réalisée par un feutre de carbone.

L'invention consiste à imprégner le feutre de carbone constitutif de l'électrode positive **10** avec un mélange de poudre métallique et de liant. Cette imprégnation est localisée au niveau d'une zone prédéterminée **17** pour réaliser la soudure entre le collecteur métallique **13** et le feutre de carbone. Ainsi, la mise en oeuvre d'un système standard de soudure par point permet de faire fondre localement le collecteur **13** et la poudre métallique imprégnée dans le feutre de carbone **10.** De cette manière une liaison mécaniquement résistante et conductrice est obtenue entre le collecteur **13** et le feutre de carbone **10**.

La soudure par point correspond à un processus bien connu réalisé par la combinaison d'une forte intensité électrique et d'une pression ponctuelle. Ce procédé ne nécessite pas d'apport extérieur de matière. L'intensité électrique chauffe la matière jusqu'à la fusion. La pression maintient le contact entre l'électrode de soudure et l'assemblage. Pour souder, une pince plaque l'assemblage avec des embouts, ou des électrodes en cuivre, matière bonne conductrice de l'électricité et de la chaleur, ce qui permet de moins chauffer la zone de contact avec cette pince et d'en éviter la fusion, qui se trouve limitée à la zone de contact entre les deux feuilles à souder : la zone prédéterminée **1**7. Cette technique est donc dépendante de la résistivité (résistance électrique) des matériaux, de l'épaisseur totale de l'assemblage et du diamètre des électrodes de soudage. L'imprégnation est réalisée avec des systèmes d'impression de type sérigraphie, spray, jet d'encre, flexographie, etc...Comme les tissus de carbones sont poreux, l'encre pénètre facilement.

La poudre métallique mise en oeuvre sera définie en fonction de la chimie de la batterie. Par exemple, les batteries Lithium-Ion utiliseront de l'aluminium et les batteries Lithium-Soufre peuvent utiliser de l'acier inoxydable, d'autres batteries pourront utiliser du nickel ou du cuivre selon les électrolytes **12** employés. Généralement la poudre métallique adjointe au feutre de carbone **10** sera de même nature que le collecteur **13,** mais pas nécessairement.

De la même manière, le liant de l'encre d'imprégnation est principalement identifié en fonction de la chimie des batteries. Si la colophane est compatible, elle sera privilégiée car elle permet de jouer le rôle de flux pendant la soudure. La colophane sert à réduire la tension superficielle des métaux fondus et leur permet de couler plus facilement pour recouvrir plus rapidement et efficacement les surfaces des parties à braser. Des couches d'oxydes se formant en permanence sur les surfaces chauffées lors d'une soudure, la colophane a pour but de dissoudre et d'éliminer ces couches d'oxydes.

En variante, d'autres liants peuvent aussi être mis en oeuvre (carboxyméthylcellulose (CMC), polytétrafluoroéthylène (PTFE) ou polyfluorure de vinylidène (PVDF)).

Le mélange préférentiellement mis en oeuvre correspond à 40% de colophane et 60% de poudre métallique en poids mais les ratios de colophane peuvent varier entre 20 et 60%.

La taille des particules métalliques mises en oeuvre est préférentiellement inférieure à 1 micromètre, et avantageusement comprise entre 200 nanomètres et 1000 nanomètres.

La taille des pores du feutre de carbone **10** est préférentiellement comprise entre 10 micromètres et 100 micromètres. Ainsi, un facteur dix entre la taille des particules et la taille des pores du feutre de carbone **10** permet une bonne imprégnation.

La zone prédéterminée **17** présente une forme sensiblement circulaire, et préférentiellement avec un diamètre compris entre 1 millimètre et 3 millimètres.

La figure 2 illustre deux zones prédéterminées **17** permettant d'assurer une liaison fiable entre le collecteur **13** et le feutre de carbone **10**. En variante, le nombre de zones prédéterminées **17** et donc le nombre de soudures peuvent varier.

L'invention permet ainsi d'obtenir une adhérence solide et conductrice entre le collecteur métallique **13** et le feutre de carbone **10** sans altérer l'électrolyte utilisée pour les batteries.

L'invention trouve notamment application pour les batteries au lithium, lithium-ion. L'invention peut également être mise en oeuvre pour les batteries lithium-soufre ainsi que les piles primaires au chlorure de thionyle car le feutre de carbone permet d'intercaler les résidus de la réaction.

## Revendications

1. Procédé de fixation entre un collecteur métallique (13) et un feutre de carbone (10) d'une batterie, **caractérisé en ce qu'**il comporte les étapes suivantes :
- imprégnation des pores du feutre de carbone (10) avec un mélange de poudre métallique et de liant, et
- soudage par point entre le collecteur métallique (13) et le feutre de carbone (10) imprégné de la poudre métallique,
l'étape d'imprégnation étant réalisée de manière localisée dans au moins une zone prédéterminée (17) du feutre de carbone (10),
l'étape de soudage par point étant réalisée au niveau de ladite au moins une zone prédéterminée (17).

2. Procédé selon la revendication 1, dans lequel la poudre métallique est constituée du même matériau que le collecteur métallique.

3. Procédé selon la revendication 1 ou 2, dans lequel la poudre métallique est constituée en majeur partie d'aluminium, d'acier inoxydable, de nickel ou de cuivre.

4. Procédé selon l'une des revendications 1 à 3, dans lequel le liant est constitué en majeur partie de colophane.

5. Procédé selon l'une des revendications 1 à 3, dans lequel le liant est constitué en majeur partie de carboxyméthylcellulose (CMC), de polytétrafluoroéthylène (PTFE) ou de polyfluorure de vinylidène (PVDF).

6. Procédé selon l'une des revendications 1 à 5, dans lequel la taille des particules métalliques de la poudre métallique est inférieure à 1 micromètre, de préférence comprise entre 200 nanomètres et 1000 nanomètres.

7. Procédé selon l'une des revendications 1 à 6, dans lequel la taille des pores du feutre de carbone est comprise entre 10 micromètres et 100 micromètres.

8. Procédé selon l'une des revendications 1 à 7, dans lequel ladite au moins une zone prédéterminée (17) constitue un cercle, dont le diamètre est compris entre 1 millimètre et 3 millimètres.

9. Procédé selon l'une des revendications 1 à 8, dans lequel le mélange présente entre 20% et 60% en poids de liant, de préférence le mélange présente 40% de liant et 60% de poudre métallique.

10. Batterie comportant :
- une électrode positive (10) réalisée en un feutre de carbone ;
- une électrode négative (11),
- un électrolyte (12) séparant les deux électrodes (10, 11),
- un premier collecteur de courant (13) relié électriquement avec l'électrode positive (10) et
- un deuxième collecteur de courant (14) relié électriquement avec l'électrode négative (11),
**caractérisée en ce que** le premier collecteur de courant (13) est fixé avec l'électrode positive (10) au moyen du procédé de fixation selon l'une des revendications 1 à 9.

## Patentansprüche

1. Befestigungsverfahren zwischen einem Metallkollektor (13) und einem Kohlenstofffilz (10) einer Batterie, **dadurch gekennzeichnet, dass** es die folgenden Schritte umfasst:
- Imprägnieren der Poren des Kohlenstofffilzes (10) mit einer Mischung aus Metallpulver und Bindemittel und
- Punktschweissen zwischen dem Metallkollektor (13) und dem mit dem Metallpulver imprägnierten Kohlenstofffilz (10),
wobei der Imprägnierschritt örtlich begrenzt in mindestens einem vorgegebenen Bereich (17) des Kohlenstofffilzes (10) durchgeführt wird,
wobei der Schritt des Punktschweissens innerhalb dieses mindestens einen vorbestimmten Bereich (17) durchgeführt wird.

2. Verfahren gemäß Anspruch 1, bei dem das Metallpulver aus demselben Material besteht wie der Metallkollektor.

3. Verfahren gemäß Anspruch 1 oder 2, bei dem das Metallpulver zum größten Teil aus Aluminium, Edelstahl, Nickel oder Kupfer besteht.

4. Verfahren gemäß einem der Ansprüche 1 bis 3, bei dem das Bindemittel zum größten Teil aus Kolophonium besteht.

5. Verfahren gemäß einem der Ansprüche 1 bis 3, bei dem das Bindemittel zum größten Teil aus Carboxymethylcellulose (CMC), Polytetrafluoroethylen (PTFE) oder Polyvinylidenfluorid (PVDF) besteht.

6. Verfahren nach einem der Ansprüche 1 bis 5, bei dem die Größe der Metallteilchen des Metallpulvers unter 1 Mikrometer liegt, am besten zwischen 200 Nanometern und 1.000 Nanometern.

7. Verfahren nach einem der Ansprüche 1 bis 6, bei dem die Größe der Poren des Kohlenstofffilzes zwischen 10 Mikrometern und 100 Mikrometern liegt.

8. Verfahren nach einem der Ansprüche 1 bis 7, bei dem der mindestens eine vorbestimmte Bereich (17) einen Kreis bildet, dessen Durchmesser zwischen 1 Millimeter und 3 Millimetern liegt.

9. Verfahren gemäß einem der Ansprüche 1 bis 8, bei dem die Mischung zwischen 20 und 60 Gewichts-% Bindemittel aufweist, vorzugsweise weist die Mischung 40% Bindemittel und 60% Metallpulver auf.

10. Batterie umfassend:
- eine positive Elektrode (10) aus einem Kohlenstofffilz;
- eine negative Elektrode (11),
- einen Elektrolyt (12), der die beiden Elektroden (10, 11) trennt,
- einen ersten Stromsammler (13), der mit der positiven Elektrode (10) elektrisch verbunden ist und
- einen zweiten Stromsammler (14), der mit der negativen Elektrode (11) elektrisch verbunden ist,
**dadurch gekennzeichnet, dass** der erste Stromsammler (13) an der positiven Elektrode (10) mittels eines Befestigungsverfahrens nach einem der Ansprüche 1 bis 9 befestigt ist.

## Claims

1. A method of attachment between a metal collector (13) and a carbon felt (10) of a battery, **characterized in that** it comprises the steps of:
- impregnation of the pores of the carbon felt (10) with a mixture of metal powder and of a binder, and
- spot welding between the metal collector (13) and the carbon felt (10) impregnated with the metal powder,
the impregnation step being locally carried out in at least one predetermined area (17) of the carbon felt (10),
the spot welding step being carried out at the level of said at least one predetermined area (17).

2. The method of claim 1, wherein the metal powder is made of the same material as the metal collector.

3. The method of claim 1 or 2, wherein the metal powder is mostly made of aluminum, of stainless steel, of nickel, or of copper.

4. The method of any of claims 1 to 3, wherein the binder is mostly made of rosin.

5. The method of any of claims 1 to 3, wherein the binder is mostly made of carboxymethylcellulose (CMC), of polytetrafluoroethylene (PTFE), or of polyvinylidene fluoride (PVDF).

6. The method of any of claims 1 to 5, wherein the size of the metal particles of the metal powder is smaller than 1 micrometer, preferably in the range from 200 nanometers to 1,000 nanometers.

7. The method of any of claims 1 to 6, wherein the size of the carbon felt pores is in the range from 10 micrometers to 100 micrometers.

8. The method of any of claims 1 to 7, wherein said at least one predetermined area (17) forms a circle having a diameter in the range from 1 millimeter to 3 millimeters.

9. The method of any of claims 1 to 8, wherein the mixture comprises from 20% to 60% by weight of binder, preferably the mixture comprises 40% of binder and 60% of metal powder.

10. A battery comprising:
- a positive electrode (10) formed of a carbon felt;
- a negative electrode (11),
- an electrolyte (12) separating the two electrodes (10, 11),
- a first current collector (13) electrically connected to the positive electrode (10), and
- a second current collector (14) electrically connected to the negative electrode (11),
**characterized in that** the first current collector (13) is attached to the positive electrode (10) by means of the attachment method of any of claims 1 to 9.
